# EUROPEAN PATENT SPECIFICATION

(11) **EP 1 312 491 B1**
(45) Date of publication and mention of the grant of the patent: **14.06.2006**
(21) Application number: 01830708.2
(22) Date of filing: 16.11.2001
(51) Int. Cl.: B60D 1/46, A01B 59/04, A01B 59/042

(54) **Towing device for a tractor and the like**
Kupplungsvorrichtung für Schlepper oder dergleichen
Dispositif d'accouplement pour tracteur ou similaire

(43) Date of publication of application: 21.05.2003
(73) Proprietor: V. Orlandi S.p.A., 25020 Flero BS (IT)
(72) Inventor: Sissa, Alessandro, c/o Costruzioni Meccaniche G., 27010 Albuzzana (Pavia) (IT); Grassi, Luigi, c/o Costruzioni Meccaniche G., 27010 Albuzzana (Pavia) (IT)
(74) Representative: Botti, Mario

(56) References cited:
- EP-A- 0 016 317
- EP-A- 0 155 338
- EP-A- 0 843 956
- DE-A- 2 852 773
- GB-A- 1 483 588
- DUBBEL ET AL: "Taschenbuch für den Maschinenbau" 1983 , SPRINGER , BERLIN XP002194013 * page 1116, paragraph 2.2.1; figure 37A *

## Description

The present invention relates to a towing device for tractors and the like, which comprises a guide piece fixed on the tractor rear and a hitch carried by a slide mounted for sliding movement along the guide piece, such that the hitch level can be brought into alignment with that of a towing eye of machinery to be taken in tow (see EP-A-0 155 338).

As is known, in a towing device, the hitch-carrying slide is set at a preselected level in the guide piece and locked there by means of a locking mechanism. When the hitch must be shifted to a different level position relative to the towing eye of a vehicle to be towed, the locking mechanism is released by an operator who will move the slide up or down as required to position the hitch at a desired level, or more precisely, to bring it closest to the desired level, and then actuate the locking mechanism.

It can be appreciated that the operator is required to bear the combined weight of the slide and the hitch until the operation is completed. This not only when raising the slide but also when lowering it, it being necessary that both movements take place in a controlled manner.

This is a long-standing situation, and considerable effort is demanded of the operator every time that the hitch level must be changed. The effort is made the more objectionable by that it has to be sustained respite-less until the locking mechanism can be actuated, its actuation involving fairly accurate adjustment of the slide in height.

The underlying problem of this invention is to provide a towing device as indicated with such structural and functional features as to serve the aforementioned function and overcome the drawback that besets the prior art.

This problem is solved by a towing device as indicated by the features of claim 1.

Further features and advantages of the towing device according to this invention will be apparent from the following description of an embodiment thereof, given by way of example and not of limitation with reference to the accompanying drawings, in which:
Figure 1 is a perspective view of a towing device for tractors and the like, according to the invention;
Figure 2 is a perspective view, drawn to an enlarged scale and from a different view angle, of the towing device shown in Figure 1;
Figure 3 is a sectional view of the towing device shown in Figure 1, taken in the direction of arrow III; and
Figure 4 is a side elevation view of the towing device as shown in Figure 3, at a different stage of its operation.

With reference to the drawing views, generally represented at 1 is a towing device, which is fixed to the rear 2 of a tractor 3. The tractor is only partly shown, and has a longitudinal axis X-X.

The towing device 1 comprises a guide piece 4 and a slide 5. The guide piece 4 is fastened to the tractor rear 2 using screw fasteners 4a, and extends along a vertical direction Z-Z. The slide 5 is in the form of a rectangular plate that lies perpendicularly to the longitudinal axis X-X and has a horizontal top side 6, a horizontal bottom side 7, opposing vertical sides that are both designated 8, a forward face 9, and a rearward face 10.

Note is made of that the towing device being described is symmetrical about a vertical plane containing the axis X-X.

The slide 5 fits slidably in the guide piece 4 and has its sides 8 enclosed and retained by side portions 11 of the guide piece.

In particular, the side portions 11 are provided with vertical tracking grooves 13 formed in respective inward faces 12 thereof, in which the sides 8 of the slide engage slidingly. The side portions 11 of the guide piece 4 are interconnected rigidly by cross rods 14.

A conventional hitch 15, of the so called wolf's mouth type, is carried on the forward face 9 of the slide 5 and is intended to receive a towing eye of agricultural implements or the like machinery, not shown.

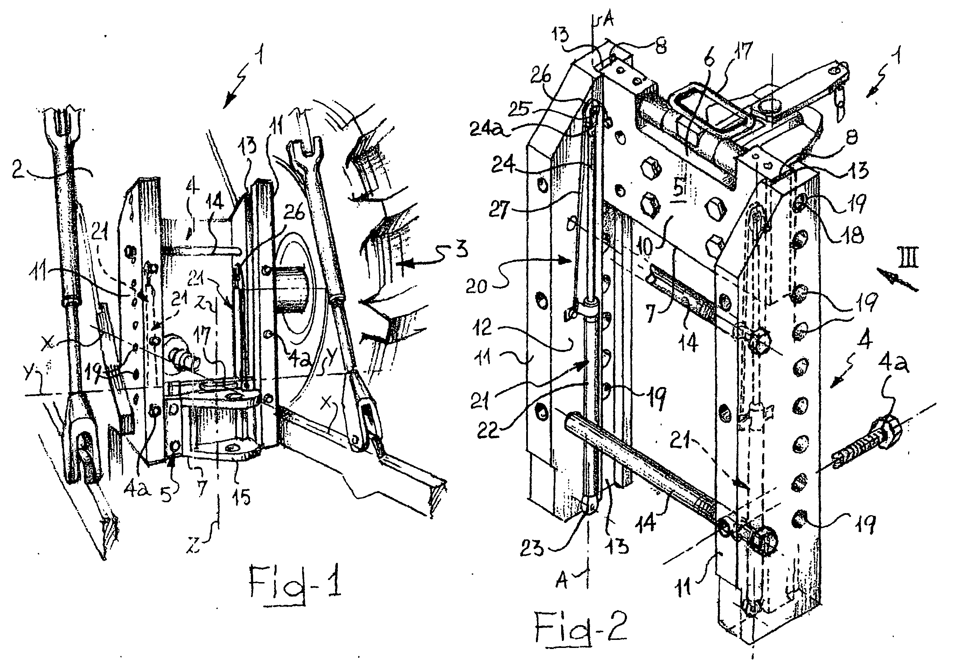

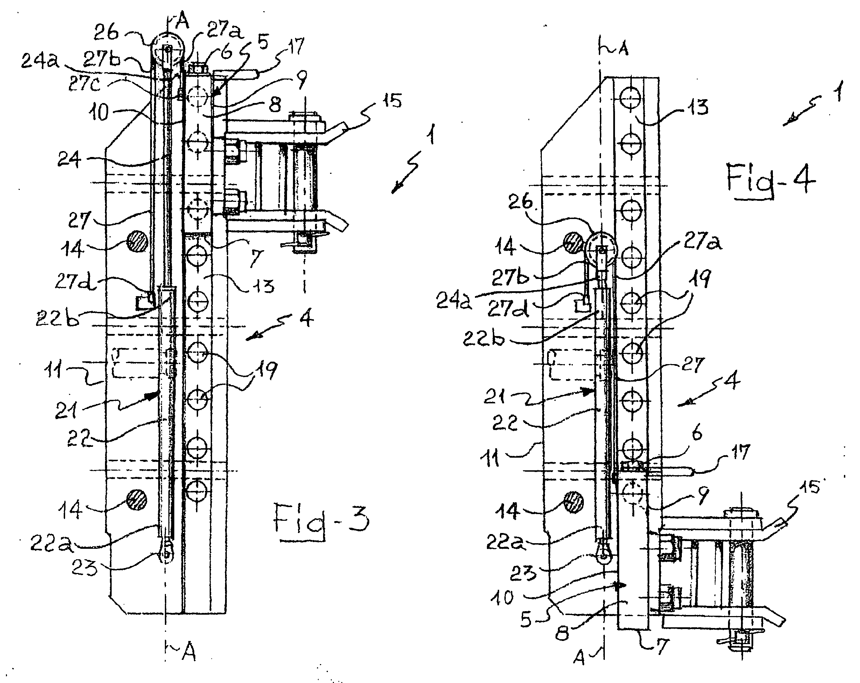

The slide 5 has a conventional locking mechanism 16 mounted on its top side 6, which mechanism is operative to lock the slide 5 at a preselected level along the guide piece 4 lying anywhere between a maximum height where the slide is at the end of its upward travel as shown in Figure 3, and a minimum height where the slide is at the end of its downward travel as shown in Figure 4.

In particular, the locking mechanism 16 can be operated manually by means of a handle 17, and comprises two cross pins 18 that extend along a horizontal direction Y-Y perpendicularly to the axis X-X and can be moved into and out of respective ones of two sets of holes 19 spaced regularly along respective side portions 11 of the guide piece 4.

In accordance with the invention, the towing device 1 comprises a counterbalance means, generally designated 20, effective to at least mitigate the combined weight of the slide 5 and the hitch 15.

The counterbalance means 20 comprises a gas cylinder-piston assembly 21 placed at one of the guide side portions 11 and having a vertical axis A-A. It is mounted close to the inward face 12 of the side portion 11 and to the rearward face 10 of the slide 5.

The gas cylinder-piston assembly 21 is known *per se* and also referred to as a gas spring available from Messrs Stabilus, for example.

The stroke length of the gas cylinder-piston assembly 21 is substantially equal to one half the travel length of the slide 5, the cylinder-piston assembly consisting of a cylinder 22 formed at one end 22a with an eye 23, and of a piston 24 that extends upwards from the other end 22 of the cylinder. The piston 24 is formed at its free end 24a with an eye 25. The cylinder 22 is connected to the side portion 11 with its eye 23, so that it spans the lower half of the guide height. In its fully extended position, the piston 24 spans the upper half of the guide height.

An idle pulley 26 is journalled in the eye 25 provided at the free end 24a of the piston 24.

The counterbalance means further comprises a steel rope 27, which is passed around the pulley in an overturned "U" pattern with its runs 27a and 27b extending downwards. One rope end, 27c, is tied to a point on the rearward face 10 of the slide that locates close to the side 6 thereof, the other end 27a of the rope being tied to a point on the inward face 12 of the side portion 9 that locates approximately halfway along the guide height, i.e. approximately level with the end 22b of the cylinder 22.

Inside the gas cylinder-piston assembly 21, a pressure is constantly applied onto the piston 24 and thus onto the pulley 26, which acts on the rope 27 substantially as a chain tightening pulley. In other words, the pulley functions as a power or driving member, and the rope as a resisting or driven member.

Advantageously, two such gas cylinder-piston assemblies are provided in the counterbalance means 20, both assemblies being designated 8 and being identical and located symmetrically relative to each other, each to lie close to a respective inward face 12 of a respective side portion 11 of the guide piece 4.

It should be noted that the two gas cylinder assemblies are calibrated to generate a force substantially equal to the weight of the slide plus that of the hitch, i.e. to each exert on the rope a pull equal to one half said weight, so that the aggregate of the gas cylinder assemblies will substantially counterbalance the combined weight of the slide and the hitch.

In operation, an operator would first release the locking mechanism, and then manually shift the slide, upwards or downwards, to set it at some different level of interest. Thereupon, the run 27a of the rope 27 tied to the slide 5 will follow the sash-like upward or downward movement of the slide, at the same time as it becomes shorter or longer in a complementary way of the run 27b and pulls the slide and hitch upwards to mitigate their weight.

A major advantage of the towing device according to the invention is that it totally relieves the operator of any physical efforts.

In addition, the invention will speed up the hitch raising and lowering operations, and especially make for quicker attainment of the required level for re-activation of the locking mechanism.

Another advantage of this towing device is its simple construction, making for long maintenance- and service-free life, substantially in line with that of the host tractor.

Note should be also made of that the invention can be retrofitted in the field on a tractor in use.

It is understood that, to fill individual demands, a skilled person in the art may make several changes and modifications unto the towing device described hereinabove, all within the protection scope of this invention as defined in the following claims.

## Claims

1. A towing device for tractors and the like, which comprises
- a guide piece (4) fixed to the tractor rear (2),
- a hitch (15) carried by a slide (5) which is mounted for sliding movement along the guide piece (4) such that the slide is manually shiftable upwards or downwards to bring the hitch (15) to a pre-set level matching the level of a towing eye on machinery to be taken in tow, and
- counterbalance means (20) acting on the slide (5) to mitigate the slide weight;
**characterized in that**
- said counterbalance means (20) comprises a gas cylinder-piston assembly (21).

2. A towing device according to Claim 1, **characterized in that** said counterbalance means (20) comprises
- rope (27) having one end (27a) tied to the guide piece (4) and the other end (27b) tied to the slide (5), and
- a pulley (26) acting on the rope (27) substantially as a chain tightening pulley under the action of the gas cylinder-piston assembly (21).

3. A towing device according to Claim 2, **characterized in that** the rope (27) is passed around the pulley (26) in an overturned "U" pattern.

4. A towing device according to Claim 3, **characterized in that** the gas cylinder-piston assembly (21) stands upright and comprises a cylinder (22) attached to the guide piece and an upward-extending piston (24) having the pulley (26) journalled in its end (24a).

5. A towing device according to Claim 4, **characterized in that** the cylinder (22) spans the lower half of the guide piece (4).

6. A towing device according to Claim 5, **characterized in that** the end (27d) of the rope (27) that is tied to the guide piece (4) is tied to a midpoint of the guide piece length.

7. A towing device according to Claim 1, **characterized in that**
- a further gas cylinder-piston assemblies (21) is provided which is substantially identical and symmetrical to said gas cylinder-piston assembly (21), whereby
- each gas cylinder-piston assembly (21) is placed close to a respective side portion (11) of the guide piece (4) and provided with a respective pulley (26) acting on a respective rope (27) substantially as a chain tightening pulley.

8. A towing device according to Claim 7, **characterized in that** each gas cylinder-piston assembly (21) is calibrated to generate a force substantially equal to the weight of the slide (5) and the hitch (15), i.e. to exert on the respective rope (27) a pull equal to one half said weight, such that the two counterbalance means (20) together substantially neutralize the weight of the slide (5) and the hitch (15).

## Patentansprüche

1. Kupplungsvorrichtung für Schlepper oder dergleichen, die umfasst
- ein an dem Schlepperheck (2) befestigtes Führungsstück (4),
- eine Anhängerkupplung (15), die von einem Schlitten (5) getragen wird, der für eine Gleitbewegung entlang des Führungsstückes (4) angebracht ist, so dass der Schlitten manuell nach oben und nach unten verschiebbar ist, um die Anhängerkupplung (15) auf eine vorgegebene Höhe zu setzen, die mit der Höhe einer Abschleppöse von abzuschleppenden Maschinen übereinstimmt, und
- Ausgleichsmittel (20), die auf den Schlitten (5) wirken, um das Schlittengewicht abzuschwächen;
**dadurch gekennzeichnet, dass** die Ausgleichsmittel (20) eine Gaszylinder-Kolbenanordnung (21) umfassen.

2. Kupplungsvorrichtung nach Anspruch 1, **dadurch gekennzeichnet, dass** die Ausgleichsmittel (20) umfassen
- ein Seil (27) mit einem Ende (27a), das mit dem Führungsstück (4) verbunden ist, und mit einem anderen Ende (27b), das mit dem Schlitten (5) verbunden ist, und
- eine Seilrolle (26), die im wesentlichen als eine Spannrolle unter der Einwirkung der Gaszytinder-Kolbenanordnung (21) auf das Seil (27) wirkt.

3. Kupplungsvorrichtung nach Anspruch 2, **dadurch gekennzeichnet, dass** das Seit (27) wie ein umgedrehtes "U" um die Seilrolle (26) gelegt ist.

4. Kupplungsvorrichtung nach Anspruch 3, **dadurch gekennzeichnet, dass** die Gaszylinder-Kolbenanordnung (21) aufrecht steht und einen an dem Führungsstück befestigten Zylinder (22) und einen sich aufwärts erstrekkenden Kolben (24) umfasst, der die Seilrolle (26) an seinem Ende (24a) lagernd aufnimmt.

5. Kupplungsvorrichtung nach Anspruch 4, **dadurch gekennzeichnet, dass** der Zylinder (22) sich über die untere Hälfte des Führungsstückes (4) erstreckt.

6. Kupplungsvorrichtung nach Anspruch 5, **dadurch gekennzeichnet, dass** das Ende (27d) des Seiles (27), das mit dem Führungsstück (4) verbunden ist, mit einem Mittelpunkt der Länge des Führungsstückes verbunden ist.

7. Kupplungsvorrichtung nach Anspruch 1, **dadurch gekennzeichnet, dass**
- eine weitere Gaszylinder-Kolbenanordnung (21) vorgesehen ist, welche im wesentlichen identisch und symmetrisch zu der besagten Gaszylinder-Kolbenanordnung (21) ist, wobei
- jede Gaszylinder-Kolbenanordnung (21) in der Nähe eines entsprechenden Seitenbereiches (11) des Führungsstückes (4) angeordnet ist und mit einer entsprechenden Seilrolle (26) ausgestattet ist, die im wesentlichen als eine Spannrolle auf ein entsprechendes Seil (27) wirkt.

8. Kupplungsvorrichtung nach Anspruch 7, **dadurch gekennzeichnet, dass** jede Gaszylinder-Kolbenanordnung (21) abgestimmt ist, um eine Kraft zu erzeugen, d.h. eine Zugkraft auf das jeweilige Seil (27) auszuüben, die der Hälfte des Gewichtes entspricht, so dass die zwei Ausgleichsmittel (20) zusammen im wesentlichen das Gewicht des Schlittens (5) und der Anhängerkupplung (15) neutralisieren.

## Revendications

1. Dispositif de remorquage pour tracteur ou similaire, comprenant:
- une pièce de guidage (4) fixée à l'arrière du tracteur (2);
- un attelage (15) porté par une coulisse (5) qui est montée de manière à effectuer un mouvement coulissant le long de la pièce de guidage (4) de telle sorte que la coulisse puisse être manuellement déplacée vers le haut ou vers le bas pour amener l'attelage (15) à un niveau préétabli correspondant au niveau d'un armeau d'attelage sur une machine à remorquer; et
- un moyen d'équilibrage (20) agissant sur la coulisse (5) pour compenser le poids de la coulisse;
**caractérisé en ce que**:
- ledit moyen d'équilibrage (20) comprend un ensemble de piston-cylindre à gaz (21).

2. Dispositif de remorquage selon la revendication 1, **caractérisé en ce que** ledit moyen d'équilibrage (20) comprend:
- un câble (27) dont une extrémité (27a) est attachée à la pièce de guidage (4) et dont l'autre extrémité (27b) est attachée à la coulisse (5); et
- une poulie (26) agissant sur le câble (27) sensiblement comme une poulie de tension de chaîne sous l'action de l'ensemble de piston-cylindre à gaz (21).

3. Dispositif de remorquage selon la revendication 2, **caractérisé en ce que** le câble (27) est passé autour de la poulie (26) en formant un motif en U inversé.

4. Dispositif de remorquage selon la revendication 3, **caractérisé en ce que** l'ensemble de piston-cylindre à gaz (21) est dressé et comprend un cylindre (22) attaché à la pièce de guidage et un piston s'étendant vers le haut (24) sur l'extrémité (24a) duquel tourillonne la poulie (26).

5. Dispositif de remorquage selon la revendication 4, **caractérisé en ce que** le cylindre (22) est en portée sur la moitié inférieure de la pièce de guidage (4).

6. Dispositif de remorquage selon la revendication 5, **caractérisé en ce que** l'extrémité (27d) du câble (27) qui est attachée à la pièce de guidage (4) est attachée à un point médian de la longueur de la pièce de guidage.

7. Dispositif de remorquage selon la revendication 1, **caractérisé en ce que**:
- des ensembles de piston-cylindre à gaz supplémentaires (21) sont prévus et sont sensiblement identiques et symétriques audit ensemble de piston-cylindre à gaz (21), dans lequel:
- chaque ensemble de piston-cylindre à gaz (21) est placé à proximité d'une partie latérale respective (11) de la pièce de guidage (4) et comprend une poulie respective (26) agissant sur un câble respectif (27) sensiblement comme une poulie de tension de chaîne.

8. Dispositif de remorquage selon la revendication 7, **caractérisé en ce que** chaque ensemble de piston-cylindre à gaz (21) est calibré pour générer une force sensiblement égale au poids de la coulisse (5) et de l'attelage (15), c'est-à-dire pour exercer sur le câble respectif (27) une traction égale à la moitié dudit poids, de telle sorte que les deux moyens d'équilibrage (20) neutralisent sensiblement ensemble le poids de la coulisse (5) et de l'attelage (15).
